# EUROPEAN PATENT SPECIFICATION

(11) **EP 2 839 188 B1**
(45) Date of publication and mention of the grant of the patent: **23.03.2016**
(21) Application number: 13723240.1
(22) Date of filing: 29.03.2013
(51) Int. Cl.: F16H 57/021, F16D 1/05

(54) **GEAR TRANSMISSION**
GETRIEBE
TRANSMISSION PAR ENGRENAGES

(30) Priority: 19.04.2012 IT PD20120121
(43) Date of publication of application: 25.02.2015
(73) Proprietor: Casarotto, Giorgio, 45021 Badia Polesine (RO) (IT)
(72) Inventor: Casarotto, Giorgio, 45021 Badia Polesine (RO) (IT)
(74) Representative: Cantaluppi, Stefano
(86) International application number: PCT/IB2013/052551
(87) International publication number: WO 2013/156882

(56) References cited:
- FR-A1- 2 409 414
- US-A- 5 176 464
- US-A- 5 203 221
- US-B1- 6 599 052

## Description

This invention relates to a transmission of a type including a casing which includes at least one final gear stage. Such transmissions are mainly but not exclusively used as reduction gears, with a fast input shaft from the drive and a gear train the final stage of which comprises a final gear to which a slow user shaft is connected through a coupling member. It should however be understood that the transmission may be constructed in the form of a multiplier gear, that is with a slow shaft drive input and a fast output shaft. In the preferred embodiment of this invention, which again is not exclusive, it is particularly suitable for the construction of so-called shaft-mounted reduction gears, that is those in which the transmission is entirely supported by the slow shaft coupled to the user. It is however provided that the transmission may be conventionally supported through the casing or otherwise.

It is known that the machine or user shaft can be connected to the final stage in two different ways. The first provides that the final gear is mounted on a hollow shaft and the user shaft is inserted into the hollow shaft. The coupling between the two is achieved through friction alone by means of a wedge locking system, the tightening cones of which are outside the gearbox. The wedge locking system may be mounted on either the user side or more usually on the side opposite the transmission. Particularly in this latter case there may be a restriction on the shaft diameters because of the dimensions of the bearings supporting the hollow output shaft of the gearbox with a consequent limitation on the maximum torque which can be transmitted by friction, which is proportional to the diameter of the coupled shafts. This fact may have an adverse effect on the overall performance of the transmission with particular reference to the maximum peak torque (start-up torque or fortuitous overload torque, etc.). It should be noted that when even slight slipping occurs between the wedged members under load, binding and welding occur between the coupled shafts, consequently making it difficult or even impossible to dismantle the gearbox from the user's machine.

Examples of this coupling are described in US 5 203 221 A, US 5 176 464 A, US 6 599 052 B and FR 2 409 414 A.

US 5 203 221 A discloses an apparatus for use with a shaft mountable gear reduction drive in which a driven shaft is coupled with reduction gears by a hollow intermediate output shaft. The output shaft is journaled within the gearbox and has a tapered axial passage for receiving one end of the generally cylindrical driven shaft. A tapered bushing is wedged into the axial passage to interlock the output shaft and the driven shaft for synchronous rotation. A retaining nut is threaded to the outboard end of the output shaft and is rotated relative thereto to advance the nut axially along the driven shaft and forcefully lock the tapered bushing in place. In order to facilitate the driving engagement of the bushing with the output shaft and driven shaft, a nut locking apparatus is provided for preventing rotation of the retaining nut when the output shaft is rotated by the gear drive, and thereby drawing the tapered bushing along the driven shaft.

The outer wedge locking system also has substantial transverse dimensions and non-negligible additional costs. An example of this coupling is described in WO 02/053940.

The second way, which is useful in cases where it is desired to ensure that the transmission can be dismantled from the user machine avoiding binding and other difficulties, provides that the rotating coupling between the user shaft and the final shaft be made through a rigid flange and counterflange mounted on the slow shaft of the transmission and the user shaft respectively and coupled together by suitable bolting. This solution nevertheless results in substantial transverse dimensions and a significant additional cost.

The problem underlying this invention is that of providing a transmission which is structurally and functionally designed to overcome all the abovementioned disadvantages. This problem is resolved through the invention by means of a transmission of the type mentioned constructed in accordance with the appended claims.

In particular the invention relates to a gear transmission with a casing containing at least one final stage of cylindrical gears comprising a final gear and a coupling member between the final gear and a coupling extremity of a user shaft, in which the coupling member comprises a flange removably fixed to the final gear and directly supported on the casing supporting the final gear and a seat for a wedge locking system made in the final gear on the side facing that flange. In this way, the transmission can be easily adapted to either a coupling with a wedge locking system on the user shaft or a flanged coupling.

In addition to this the coupling member is predominantly contained within the dimensions of the casing, so that the transmission is particularly compact.

Characteristics and advantages of the invention will be more apparent from the following detailed description of two preferred embodiments which are illustrated by way of indication and without limitation with reference to the appended drawings in which:
Figure 1 is a diagrammatical view in cross-section of a first embodiment of this invention;
Figure 2 is a diagrammatical view in cross-section of a second embodiment of this invention.

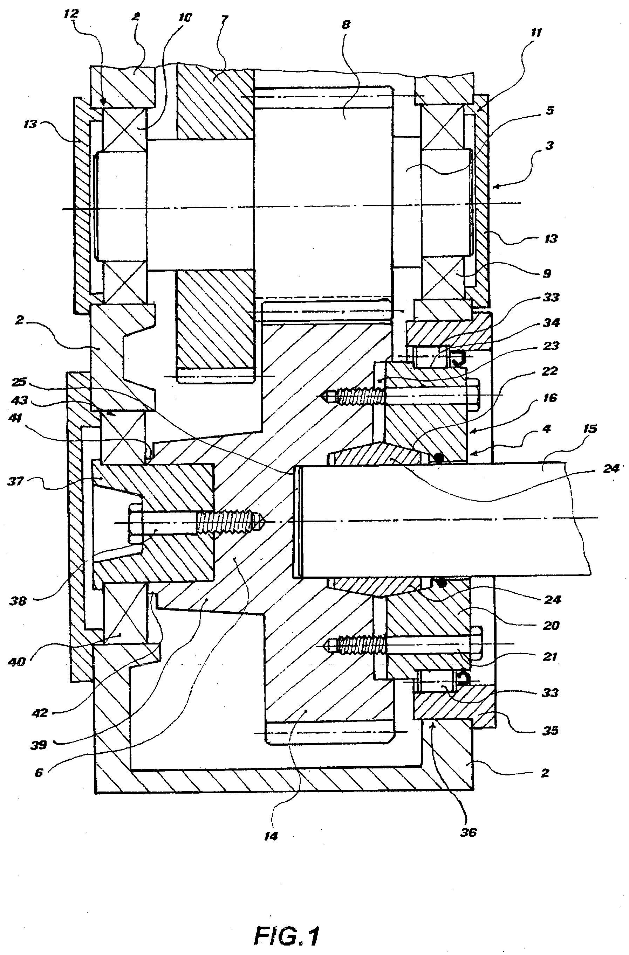

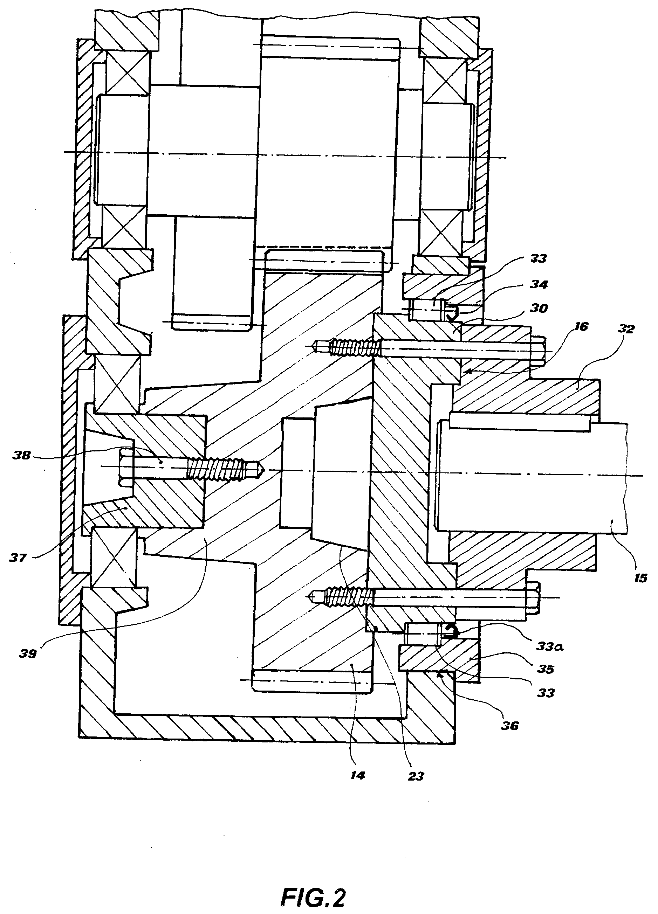

With reference to both the embodiments in Figures 1 and 2, a transmission according to the invention, in the case in point a shaft-mounted gearbox indicated as a whole by 1, comprises a casing 2 containing two or more transmission stages including at least one intermediate stage 3 and a final transmission stage 4, the gears of which are mounted on corresponding shafts 5, 6. Intermediate stage 3 comprises first and second gears 7, 8 which rotate as one with shaft 5. The latter is supported on casing 2 through bearings 9, 10 housed in corresponding seats 11, 12 closed by covers 13. The intermediate stage may however be of any type, including gearing stages with tapering or epicycloidal, etc., gears.

Final stage 4 has cylindrical gears, with a final gear 14 engaging intermediate gear 8 and designed to rotate as one with a user shaft 15 through a coupling member indicated as a whole by 16.

In both the illustrated examples coupling member 16 is removably attached to final gear 14, which is predominantly contained within the dimensions of casing 2 and is directly supported on the casing supporting final gear 14 through a bearing which will be described in greater detail below.

In the first embodiment of transmission 1 according to the invention this is constructed in the form of a double taper wedge locking system provided partly in the body of final gear 14 and partly through a flange 20 coupled to gear 14 through bolts 21. Corresponding facing tapering surfaces 22, 23 are axially defined in gear 14 and flange 20 to house a radially contractile double tapering member 24. Tapering surface 23 is extended into a blind hole 25 intended to house the free end of user shaft 15. A static seal 27, for example an O-ring, is placed between flange 20 and user shaft 15 to prevent the ingress of contaminants.

When bolts 21 are tightened, flange 20 is brought up against the facing surface of gear 14 and immobilised against it at the same time closing double tapering member 24 onto user shaft 15. The torque is transmitted to the user shaft from the final gear essentially through friction.

In the context of this invention it should be noted that by the term "predominantly contained" it is meant that the overall dimensions of the coupling member are contained at least predominantly within the volume defined by casing 2. However for the purposes of this invention it is not necessarily required that no portion of the coupling member should project from the casing, but for example in the present embodiment the heads of bolts 21 coupling flange 20 to gear 14 may, when tightened, remain outside the perimeter of casing 2. In the second embodiment of transmission 1 illustrated in Figure 2, coupling member 16 is constructed in the form of a flange 30 coupled to gear 14 through bolts 31 through which it is also attached to a counterflange 32 belonging to user shaft 15. It will be noted that tapering surface 23 is always constructed in gear 14 as a result of which the gear may be the same as in the first embodiment. In practice the same basic structure of the transmission may be constructed in two versions, according to the first and second embodiments, with a tapering wedge locking system coupling and a flanged coupling respectively, which increases the versatility of the system.

In this embodiment, so that the coupling member can be said to be predominantly contained within the casing, at least a predominant portion of flange 30 must be contained within the perimeter of the casing. Otherwise counterflange 32, which does not form part of the coupling member in this embodiment, may be partly or wholly outside casing 2.

In both embodiments 1A and 1B, flanges 20, 30 further comprise a component designed to directly support final gear 14 on casing 2. In a preferred embodiment these are constructed in the form of an internal race of a roller or ball bearing 33 or more generally in the form of rolling elements, internal race having an external circumferential surface 34 comprising a rolling track for these rolling elements. An outer race 35 is fitted in a corresponding seat 36 of casing 2 completing bearing 33. Surface 34 may also act as a seal 33a.

In order to be able to fit the final stage of the transmission without difficulty, final gear 14 is provided with a removable tail 37 on the side opposite bearing 33, secured by bolt 38 or other means allowing it to be separated to a shank 39 of final gear 14 so that shank 39 and tail 37 together form a length of the transmission output shaft.

A bearing 40 is held with its internal race between corresponding shoulders 41 of tail 37 and 42 of shank 39 and its outer race housed in a seat 43 in casing 2 completing the support for the final gear.

Among the main advantages of this invention is the fact that the tapering seat of the wedge locking system is wholly located within gear 14 in such a way that by changing a single component, flanges 20 and 30 respectively, it is easily possible to obtain one or other of the two versions of this transmission, which makes it particularly versatile and adaptable to different requirements.

It is also advantageous that the internal track of the bearing supporting the final stage of the transmission is located on the abovementioned flanges. Not least, the axial dimensions of the transmission are particularly compact.

## Claims

1. A gear transmission having a casing (2) comprising at least one final stage (4) having cylindrical gears, the final stage (4) including a final gear (14) and a coupling member (16) between the final gear (14) and a coupling extremity of a user shaft (15), the coupling member (16) comprising a flange (20, 30) removably attached to the final gear (14) and directly supported on the casing (2) for supporting the final gear (14), **characterised in that** the coupling member (16) further comprises a tapering surface (23) axially defined in the final gear (14) on the side thereof facing the flange (20, 30) for seating a wedge locking system apt to lock to each other the final gear (14) and the user shaft (15), in which the tapering surface (23) is extended into a blind hole (25) of said final gear (14).

2. A transmission according to claim 1, in which the coupling member (16) is predominantly contained within the dimensions of the casing (2).

3. A transmission according to any of the preceding claims, in which the final gear (14) has a frustoconical coaxial seat and is designed to interchangeably receive a tapering wedge locking system engaging said frustoconical seat and a flanged coupling.

4. A transmission according to any of the preceding claims, in which the final gear (14) comprises a removable tail (37) through which it is supported on the casing (2) on the side opposite the coupling member (16).

5. A transmission according to any of the preceding claims, in which the flange (20, 30) forms an internal race (34) of a bearing.

6. A transmission according to claim 5, in which the external race (35) of the bearing is supported on the casing (2).

7. A transmission according to one of claims 4 to 6, in which the flange (20) comprises a contact surface for a sealing ring.

8. A transmission according to any of the preceding claims, in which the flange (20,30) is bolted to the final gear (14).

9. A transmission according to any of the preceding claims, in which the wedge locking system includes a double tapering member which engages the tampering surface (23) of the final gear (14) on the one side and a corresponding seat (22) in the flange (20) on the other side.

10. A transmission according to one of claims 1 to 8, in which the coupling member (16) is of the flange (30) and counterflange (32) type, wherein the counterflange (32) belongs to the user shaft (15) and is coupled to the flange (30) for reciprocal torque transmission.

11. A transmission according to claim 10, in which the counterflange (32) is bolted to the final gear (14) through the same bolts fixing the flange (30) to the final gear (14).

## Patentansprüche

1. Getriebe mit einem Gehäuse (2), das zumindest eine Endstufe (4) mit Stirnrädern aufweist, wobei die Endstufe (4) ein Endzahnrad (14) und ein Kupplungselement (16) zwischen dem Endzahnrad (14) und einem Kupplungsendpunkt einer Nutzerwelle (15) umfasst, wobei das Kupplungselement (16) einen Flansch (20, 30) aufweist, der am Endzahnrad (14) entfernbar angeordnet und direkt auf dem Gehäuse (2) zum Lagern des Endzahnrads (14) gelagert ist, **dadurch gekennzeichnet, dass** das Kupplungselement (16), ferner eine sich verjüngende Fläche (23), die axial im Endzahnrad (14) ausgebildet ist, auf der Seite davon, die dem Flansch (20, 30) zugewandt ist, zum Aufsetzen eines Keilverblockungssystems aufweist, das geeignet ist, um das Endzahnrad (14) und die Nutzerwelle (15) miteinander zu verriegeln, indem sich die sich verjüngende Fläche (23) in ein Sackloch (25) des Endzahnrads (14) erstreckt.

2. Getriebe gemäß Anspruch 1, in dem das Kupplungselement (16) überwiegend innerhalb der Abmessungen des Gehäuses (2) enthalten ist.

3. Getriebe gemäß einem der vorhergehenden Ansprüche, in dem das Endzahnrad (14) einen kegelstumpfartigen koaxialen Sitz aufweist und ausgebildet ist, um ein sich verjüngendes Keilverblockungssystem austauschbar aufzunehmen, das mit dem kegelstumpfartigen Sitz und einer Flanschkupplung in Eingriff steht.

4. Getriebe gemäß einem der vorhergehenden Ansprüche, in dem das Endzahnrad (14) ein entfernbares Ende (37) aufweist, durch das es auf dem Gehäuse (2) auf der Seite, die dem Kupplungselement (16) gegenüber liegt, gelagert ist.

5. Getriebe gemäß einem der vorhergehenden Ansprüche, in dem der Flansch (20, 30) einen Innenlaufring (34) eines Lagers bildet.

6. Getriebe gemäß Anspruch 5, in dem der Außenlaufring (35) des Lagers auf dem Gehäuse (2) gelagert ist.

7. Getriebe gemäß einem der Ansprüche 4 bis 6, in dem der Flansch (20) eine Kontaktfläche für einen Dichtring aufweist.

8. Getriebe gemäß einem der vorhergehenden Ansprüche, in dem der Flansch (20, 30) am Endzahnrad (14) angeschraubt ist.

9. Getriebe gemäß einem der vorhergehenden Ansprüche, in dem das Keilverblockungssystem ein doppelt sich verjüngendes Element umfasst, das mit der sich verjüngenden Fläche (23) des Endzahnrads (14) auf der einen Seite und einem entsprechenden Sitz (22) im Flansch (20) auf der anderen Seite in Eingriff steht.

10. Getriebe gemäß einem der Ansprüche 1 bis 8, in dem das Kupplungselement (16) aus dem Flansch (30) und einem Gegenflansch (32) besteht, wobei der Gegenflansch (32) zur Nutzerwelle (15) gehört und mit dem Flansch (30) zur gegenseitigen Drehmomentübertragung verbunden ist.

11. Getriebe gemäß Anspruch 10, in dem der Gegenflansch (32) am Endzahnrad (14) durch dieselben Bolzen, die den Flansch (30) am Endzahnrad (14) fixieren, angeschraubt ist.

## Revendications

1. Transmission par engrenages présentant un boîtier (2) comprenant au moins un étage final (4) avec des engrenages cylindriques, l'étape finale (4) incluant un engrenage final (14) et un élément de couplage (16) entre l'engrenage final (14) et une extrémité de couplage d'un arbre utilisateur (15), l'élément de couplage (16) comprenant une bride (20, 30) attachée de manière amovible à l'engrenage final (14) et supportée directement sur le boîtier (2) pour supporter l'engrenage final (14), **caractérisée en ce que** l'élément de couplage (16) comprend en outre une surface effilée (23) définie axialement dans l'engrenage final (14) sur le côté de celui-ci faisant face à la bride (20, 30) pour loger un système de verrouillage par coin apte à verrouiller l'un à l'autre l'engrenage final (14) et l'arbre utilisateur (15), dans lequel la surface effilée (23) est étendue dans un trou borgne (25) dudit engrenage final (14).

2. Transmission selon la revendication 1, dans laquelle l'élément de couplage (16) est contenu principalement dans les dimensions du boîtier (2).

3. Transmission selon l'une quelconque des revendications précédentes, dans laquelle l'engrenage final (14) a un support coaxial tronconique et est conçu pour recevoir de manière interchangeable un système de verrouillage par coin effilé engageant ledit support tronconique et un couplage par bride.

4. Transmission selon l'une quelconque des revendications précédentes, dans laquelle l'engrenage final (14) comprend une extrémité amovible (37), par lequel il est supporté sur le boîtier (2) sur le côté en regard de l'élément de couplage (16).

5. Transmission selon l'une quelconque des revendications précédentes, dans laquelle la bride (20, 30) forme une bague interne (34) d'un palier.

6. Transmission selon la revendication 5, dans laquelle la bague externe (35) du palier est supportée sur le boîtier (2).

7. Transmission selon l'une quelconque des revendications 4 à 6, dans laquelle la bride (20) comprend une surface de contact pour un anneau étanche.

8. Transmission selon l'une quelconque des revendications précédentes, dans laquelle la bride (20, 30) est boulonnée à l'engrenage final (14).

9. Transmission selon l'une quelconque des revendications précédentes, dans laquelle le système de verrouillage par coin inclut un double élément effilé qui engage la surface effilée (23) de l'engrenage final (14) sur l'un côté et un support correspondant (22) dans la bride (20) sur l'autre côté.

10. Transmission selon l'une quelconque des revendications 1 à 8, dans laquelle l'élément de couplage (16) est de type bride (30) et contre-bride (32), dans laquelle la contre-bride (32) appartient à l'arbre utilisateur (15) et est couplée à la bride (30) pour la transmission de couple réciproque.

11. Transmission selon la revendication 10, dans laquelle la contre-bride (32) est boulonnée à l'engrenage final (14) par les mêmes boulons fixant la bride (30) à l'engrenage final (14).
